(19) Europäisches Patentamt
European Patent Office
Office européen des brevets

(11) Veröffentlichungsnummer : **0 174 493**
**B1**

(12) # EUROPÄISCHE PATENTSCHRIFT

(45) Veröffentlichungstag der Patentschrift : **25.05.88**

(51) Int. Cl.⁴ : **C 08 L 69/00**, C 08 L 51/00, C 08 L 25/04

(21) Anmeldenummer : **85109805.3**

(22) Anmeldetag : **05.08.85**

(54) **Thermoplastische Formmassen mit flammwidrigen Eigenschaften.**

(30) Priorität : **17.08.84 DE 3430235**
**03.10.84 DE 3436162**
**06.04.85 DE 3512638**

(43) Veröffentlichungstag der Anmeldung : **19.03.86 Patentblatt 86/12**

(45) Bekanntmachung des Hinweises auf die Patenterteilung : **25.05.88 Patentblatt 88/21**

(84) Benannte Vertragsstaaten : **DE FR GB IT NL**

(56) Entgegenhaltungen :
**EP-A- 0 103 230**
**EP-A- 0 115 885**
**DE-A- 2 264 104**
**DE-A- 2 918 883**
**DE-A- 2 921 325**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Kreß, Hans-Jürgen, Dr.**
**Scheiblerstrasse 111**
**D-4150 Krefeld (DE)**
Erfinder : **Kauth, Hermann, Dr.**
**Kolpingstrasse 34**
**D-4150 Krefeld 11 (DE)**
Erfinder : **Peters, Horst, Dr.**
**Winterberg 25**
**D-5090 Leverkusen 3 (DE)**
Erfinder : **Lindner, Christian, Dr.**
**Riehler Strasse 200**
**D-5000 Köln 60 (DE)**
Erfinder : **Müller, Friedemann, Dr.**
**Am Steinacker 5**
**D-4040 Neuss 21 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**EP 0 174 493 B1**

**Beschreibung**

Gegenstand der vorliegenden Erfindung sind thermoplastische Formmassen bestehend aus

A) 20 bis 85 Gew.-Teilen eines thermoplastischen aromatischen Polycarbonats,

B) 5 bis 50 Gew.-Teilen eines Pfropfpolymerisats aus

B)1) 5 bis 90 Gew.-Teilen, vorzugsweise 30 bis 80 Gew.-Teilen einer Mischung aus

B)1)1) 50 bis 95 Gew.-% Styrol, α-Methylstyrol, kernsubstituiertem Styrol, Methylmethacrylat oder Mischungen daraus, und

B)1)2) 50 bis 5 Gew.-% (Meth)Acrylnitril, Methylmethacrylat, Maleinsäureanhydrid, N-substituiertem Maleinimid oder Mischungen daraus, auf

B)2) 95 bis 10 Gew.-Teile, vorzugsweise 70 bis 20 Gew.-Teile, eines Kautschuks mit einer Glastemperatur $T_G \leq 10\ ^{\circ}C$,

C) 5 bis 70 Gew.-Teilen eines thermoplastischen Copolymerisats aus

C)1) 50 bis 95 Gew.-% Styrol, α-Methylstyrol, kernsubstituiertem Styrol, Methylmethacrylat oder Mischungen daraus, und

C)2) 50 bis 5 Gew.-% (Meth)Acrylnitril, Methylmethacrylat, Maleinsäureanhydrid, N-substituiertem Maleinimid oder Mischungen daraus, und gegebenenfalls

D) 3 bis 15 Gew.-Teilen einer niedermolekularen oder hochmolekularen Halogenverbindung, insbesondere einer Bromverbindung, bezogen auf jeweils 100 Gew.-Teile aus A + B + C und gegebenenfalls D), wobei jeweils der Halogengehalt resultierend aus den Komponenten A) + D), zwischen 3 Gew.-% und 10 Gew.-%, bezogen auf das Gesamtgewicht der Komponenten A) + D), betragen soll, die dadurch gekennzeichnet sind, daß sie zusätzlich

E) 2 bis 12 Gew.-Teile einer Phosphorverbindung der Formel (I)

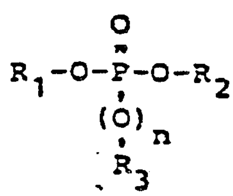

(I)

worin $R_1$, $R_2$ und $R_3$ unabhängig voneinander ein gegebenenfalls halogeniertes $C_1$-$C_8$-Alkyl oder ein gegebenenfalls halogeniertes $C_6$-$C_{20}$-Aryl und « n » 0 oder 1 sind, und

F) 0,1 bis 0,5 Gew.-Teile eines Tetrafluorethylenpolymerisats mit mittleren Teilchengrößen von 0,05 bis 20 µm enthalten und einer Dichte von 1,2 bis 1,9 g/cm³,

wobei sich die Gew.-Teile der Komponenten E) und F) jeweils auf 100 Gew.-Teile der Summe der Komponenten A) + B) + C) und gegebenenfalls D) beziehen und

wobei die Komponente F) in Form einer koagulierten Mischung von Emulsionen der Tetrafluorethylenpolymerisate F) mit Emulsionen von zusätzlichen Mengen an Pfropfpolymerisaten B) von maximal 4 Gew.-Teilen, mindestens jedoch 0,1 Gew.-Teil, bezogen auf 100 Gew.-Teile der Summe der Komponenten A) + B) + C) und gegebenenfalls D), eingesetzt wird.

Erfindungsgemäß geeignete, thermoplastische, aromatische Polycarbonate gemäß Komponente A) sind solche auf Basis der Diphenole der Formel (II)

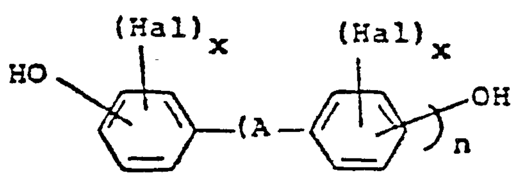

(II)

worin A eine Einfachbindung, ein $C_1$-$C_5$-Alkylen, ein $C_2$-$C_5$-Alkyliden, ein $C_5$-$C_6$-Cycloalkyliden, —S— oder —$SO_2$—, Hal, Chlor oder Brom, x o, 1 oder 2 und « n » 1 oder null sind, und gegebenenfalls der Formel (IIa)

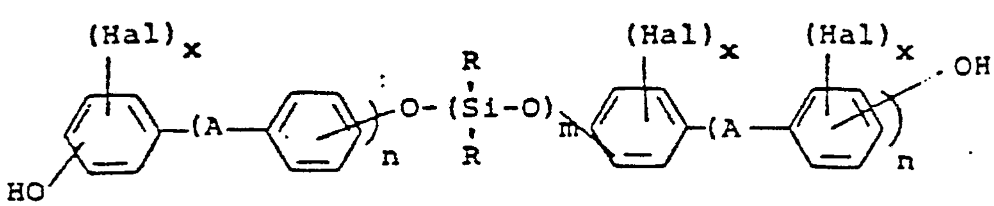

(IIa)

worin A, Hal, x und « n » die für Formel (II) genannte Bedeutung haben, und die R's gleich oder verschieden sind und ein lineares $C_1$-$C_{20}$-Alkyl, verzweigtes $C_3$-$C_{20}$-Alkyl, $C_6$-$C_{20}$-Aryl, vorzugsweise $CH_3$ sind und « m » eine ganze Zahl zwischen 5 und 100, vorzugsweise zwischen 20 und 80 ist.

Erfindungsgemäß geeignete Polycarbonate gemäß Komponente A) sind sowohl Homopolycarbonate als auch Copolycarbonate, wobei die Diphenole der Formel (IIa) nur für die Herstellung von Copolycarbonaten mit den Diphenolen der Formel (II) eingesetzt werden, wobei der Gewichtsanteil an Diphenolen der Formel (IIa) in den Copolycarbonaten jeweils zwischen 1 und 20 Gew.-%, vorzugsweise zwischen 1,5 und 15 Gew.-% und insbesondere zwischen 2 und 10 Gew.-%, bezogen jeweils auf die Gewichtssumme der eingesetzten Diphenole der Formeln (II) und (IIa) liegt.

Die Diphenole der Formel (II) sind entweder literaturbekannt oder nach literaturbekannten Verfahren herstellbar; Polydiorganosiloxane mit Hydroxy-aryloxy-Endgruppen gemäß Formel (IIa) sind ebenfalls bekannt (siehe beispielsweise US-Patent 3 419 634) beziehungsweise nach literaturbekannten Verfahren herstellbar.

Die Herstellung der erfindungsgemäß geeigneten Polycarbonate gemäß Komponente A) ist literaturbekannt und kann beispielsweise mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich Polydiorganosiloxan-haltigen Polycarbonaten siehe beispielsweise DE-OS 3 334 872 (Le A 22 594)).

Geeignete Kettenabbrecher sind beispielsweise Phenol, p-Chlorphenol, p-tert.-Butylphenol und 2,4,6-Tribromphenol, aber auch langkettige Alkylphenole wie 4-(1,3-Tetramethyl-butyl)-phenol und 4-(3,5-Dimethyl-heptyl)-phenol gemäß DE-OS 2 842 005 (Le A 19 006) oder Monoalkylphenole oder Dialkylphenole mit insgesamt 8 bis 20 C-atomen in der Alkylsubstituenten gemäß deutscher Patentanmeldung P 3 506 472.2 (Le A 23 654) wie p-iso-Octylphenol, p-Nonylphenol, 3,5-Di-tert.-butyl-phenol, p-tert.-Octylphenol, p-Dodecyl-phenol und 2-(3,5-Dimethylheptyl)-phenol. Die erfindungsgemäß geeigneten Polycarbonate gemäß Komponente A) haben mittlere Gewichtsmittelmolekulargewichte ($\bar{M}w$, gemessen beispielsweise durch Ultrazentrifugation oder Streulichtmessung) von 10 000 bis 200 000, vorzugsweise von 20 000 bis 80 000.

Geeignete Diphenole der Formel (II) sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dichlor-4-hydroxyphenyl)-propan und 2,2-Bis-(3,5-dibrom-4-hydroxyphenyl)-propan.

Bevorzugte Diphenole der Formel (II) sind 2,2-Bis-(4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Geeignete Diphenole der Formel (IIa) sind solche in denen R Methyl, Ethyl, Propyl, n-Butyl, tert.-Butyl, Phenyl und Naphthyl ist.

Bevorzugte Diphenole der Formel (IIa) sind die der Formel (IIb)

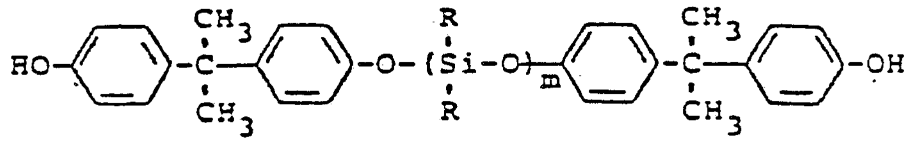

(IIb)

worin die R's gleich sind und die vorstehend genannte Bedeutung haben, also Methyl etc. und Naphthyl bedeuten und m wiederum eine ganze Zahl zwischen 5 und 100, vorzugsweise zwischen 20 und 80 ist.

Die Herstellung der Diphenole der Formel (IIa) kann beispielsweise aus den entsprechenden Bischlorverbindungen (III)

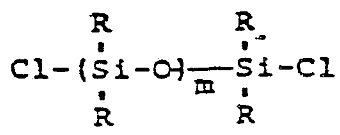

(III)

und den Diphenolen (II) beispielsweise gemäß US-Patent 3 419 634, Spalte 3 in Kombination mit US-Patent 3 189 662 erfolgen.

In den Bis-chlorverbindungen (III) haben R und m die Bedeutung wie in den Diphenolen (IIa) beziehungsweise (IIb).

Die erfindungsgemäß geeigneten Polycarbonate gemäß Komponente A) können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, beispielsweise solchen mit drei oder mehr als drei phenolischen OH-Gruppen.

Bevorzugte Polycarbonate sind neben dem Bisphenol-A-Homopolycarbonat die Copolycarbonate

von Bisphenol-A mit bis zu 15 Mol-%, bezogen auf die Molsumme an Diphenolen, an 2,2-Bis-(3,5-dibrom-4-hydroxyphenyl)-propan oder die Copolycarbonate der Diphenole der Formel (II) mit 1 bis 20 Gew.-% an Diphenolen der Formel (IIa), vorzugsweise der Formel (IIb), bezogen jeweils auf die Gewichtssumme der Diphenole (II) und (IIa), beziehungsweise (II) und (IIb).

Zur Herstellung der Pfropfpolymerisate gemäß Komponente B) geeignete Kautschuke sind insbesondere Polybutadien, Butadien/Styrol-Copolymerisate mit bis zu 30 Gew.-%, bezogen auf Kautschukgewicht, eines niederen Alkylesters von Acryl- oder Methacrylsäure (beispielsweise Methylmethacrylat, Ethylacrylat, Methylacrylat oder Ethylmethacrylat). Weitere geeignete Kautschuke sind beispielsweise Polyisopren oder Polychloropren. Geeignet sind weiterhin Alkylacrylatkautschuke auf der Basis von $C_1$-$C_8$-Alkylacrylaten, insbesondere Ethyl-, Butyl-, Ethylhexylacrylat. Diese Alkylacrylatkautschuke können gegebenenfalls bis zu 30 Gew.-%, bezogen auf Kautschukgewicht, Monomere wie Vinylacetat, Acrylnitril, Styrol, Methylmethacrylat und/oder Vinylether copolymerisiert enthalten. Diese Alkylacrylatkautschuke können weiterhin kleinere Mengen, vorzugsweise bis zu 5 Gew.-%, bezogen auf Kautschukgewicht, vernetzend wirkender ethylenisch ungesättigter Monomere enthalten. Solche Vernetzer sind z. B. Alkylendioldi(meth)-acrylate, Polyesterdi-(meth)-acrylat, Divinylbenzol, Tri-Vinylbenzol, Triallylcyanurat, Allyl-(meth)-acrylat, Butadien oder Isopren. Solche Alkylacrylate sind bekannt. Acrylatkautschuke als Propfgrundlage können auch Produkte sein, die einen vernetzten Dienkautschuk aus einem oder mehreren konjugierten Dienen, wie Polybutadien, oder ein Copolymerisat eines konkjugierten Diens mit einem ethylenisch ungesättigten Monomer, wie Styrol und/oder Acrylnitril, als Kern enthalten. Andere geeignete Kautschuke sind z. B. EPDM-Kautschuke, also Kautschuke aus Ethylen, Propylen und einem unkonjugierten Dienmonomer.

Bevorzugte Kautschuke zur Herstellung der Pfropfpolymerisate (B) sind Dienmonomer- und Alkylacrylatkautschuke.

Die Kautschuke liegen in den Pfropfpolymerisaten B) in Form wenigstens partiell vernetzter Teilchen einer mittleren Teilchengröße von 0,09 bis 5 µm, insbesondere 0,1 bis 1 µm vor. Die Pfropfpolymerisate B) werden durch radikalische Pfropfcopolymerisation der eingangs definierten Monomerengemische aus B)1)1) und B)1)2) in Gegenwart der zu pfropfenden Kautschuke B)2) hergestellt und sind durchweg bekannt. Bevorzugte Herstellungsverfahren für die Pfropfpolymerisate B) sind Emulsions-, Lösungs-; Masse oder Suspensionspolymerisation. Besonders bevorzugte Pfropfpolymerisate B) sind die sogenannten ABS-Polymerisate. Als kernsubstituierte Styrole seien Halogenstyrole und p-Methylstyrol erwähnt.

Bevorzugte Copolymerisate gemäß Komponente C) sind solche aus wenigstens einem Monomeren aus der Reihe Styrol, α-Methylstyrol, Halogenstyrol gemäß C)1) mit wenigstens einem Monomeren aus der Reihe Acrylnitril, Methacrylnitril, Methylmethacrylat, Maleinsäureanhydrid gemäß C)2).

Copolymerisate gemäß Komponente C) entstehen häufig bei der Pfropfpolymerisation zur Herstellung der Komponente B) als Nebenprodukte, besonders dann, wenn große Mengen Monomere auf kleine Mengen Kautschuk gepfropft werden.

Die erfindungsgemäß einzusetzende Menge an Copolymerisat C) von 5 bis 70 Gew.-Teilen, bezogen auf 100 Gew.-Teile aus A) + B) + C) und gegebenenfalls D), bezieht diese Nebenprodukte der Pfropfpolymerisation nicht mit ein.

Die Copolymerisate gemäß Komponente C) sind harzartig, thermoplastisch und kautschukfrei. Besonders bevorzugte Copolymerisate C) sind solche aus Styrol mit Acrylnitril und gegebenenfall mit Methylmethacrylat, aus α-Methylstyrol mit Acrylnitril und gegebenenfalls mit Methylmethacrylat oder aus Styrol und α-Methylstyrol mit Acrylnitril und gegebenenfalls mit Methylmethacrylat.

Besonders bevorzugte Gewichtsverhältnisse im thermoplastischen Copolymerisat C) sind 60 bis 80 Gew.-% C)1) und 40 bis 20 Gew.-% C)2).

Die Copolymerisate gemäß Komponente C) sind bekannt und lassen sich durch radikalische Polymerisation, insbesondere durch Emulsions-, Suspensions-, Lösungs- oder Massepolymerisation herstellen. Die Copolymerisate gemäß Komponente C) besitzen vorzugsweise Molekulargewichte $\bar{M}w$ (Gewichtsmittel, ermittelt durch Lichtstreuung oder Sedimentation) zwischen 15 000 und 200 000.

Erfindungsgemäß geeignete organische Halogenverbindungen D) sind im Prinzip alle die bei der Herstellung und Verarbeitung der erfindungsgemäßen Formmassen nicht flüchtig und thermisch stabil sind. d. h. dabei kein Halogen abspalten, und somit im Brandfall ihre Flammschutzwirkung ausüben können. Insbesondere sind geeignet Decabromdiphenylether, Octabromdiphenyl, Octabromdiphenylether und Tribromtetrachlortoluol, ferner oligomere Bromverbindungen wie beispielsweise Oligocarbonate auf Basis Tetrabrombisphenol-A und schließlich auch polymere Bromverbindungen wie beispielsweise hochmolekulare Polycarbonate auf Basis Tetrabrombisphenol-A oder kernbromierte Polyphenylenoxide.

Der Halogengehalt, resultierend aus der Komponente D), kann somit auch über das hochmolekulare Polycarbonat gemäß Komponente A) eingebracht werden.

Die erfindungsgemäß einzusetzenden Phosphorverbindungen gemäß Komponente E) sind generell bekannt (siehe beispielsweise Ullmann, Enzyklopädie der technischen Chemie, Band 18, Seiten 301 ff, 1979).

Gegebenenfalls halogeniertes $C_1$-$C_8$-Alkylreste gemäß $R_1$, $R_2$ oder $R_3$ der Formel (I) sind Chlorethyl, 2-Chlorpropyl, 2,3-Dibrompropyl, Butyl, Methyl und Octyl.

Gegebenenfalls halogenierte $C_6$-$C_{20}$-Arylreste gemäß $R_1$, $R_2$ oder $R_3$ der Formel (I) sind Chlorphenyl, Bromphenyl, Pentachlorphenyl, Pentabromphenyl, Phenyl, Kresyl, Isopropylphenyl und Naphthyl.

Erfindungsgemäß einsetzbare Phosphorverbindungen gemäß Formel (I) sind Tributylphosphat, Tris-(2-chlorethyl)-phosphat, Tris-(2,3-dibrompropyl)phosphat, Triphenylphosphat, Trikresylphosphat, Diphenylkresylphosphat, Diphenyloctylphosphat, Diphenyl-2-ethylkresylphosphat, Tri-(isopropylphenyl)phosphat, halogensubstituierte Arylphosphate, Methanphosphonsäuredimethylester, Methanphosphonsäurediphenylester und Phenylphosphonsäurediethylester.

Die erfindungsgemäß geeigneten Tetrafluorethylenpolymerisate gemäß Komponente F) sind Polymere mit Fluorgehalten von 65 bis 76 Gew.-%, vorzugsweise 70 bis 76 Gew.-%. Beispiele sind Polytetrafluorethylen, Tetrafluorethylen-Hexafluorpropylen-Copolymere oder Tetrafluorethylencopolymerisate mit geringen Mengen fluorfreier copolymerisierbarer ethylenisch ungesättigter Monomer. Die Polymerisate sind bekannt. Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat bei Drucken von 7 bis 71 kg/cm$^2$ und bei Temperaturen von 0 bis 200 °C, vorzugsweise bei Temperaturen von 20 bis 100 °C. (Nähere Einzelheiten siehe beispielsweise US-Patent 2 393 967).

Die erfindungsgemäß geeigneten Polytetrafluorethylene haben mittlere Teilchengrößen von 0,05 bis 20 µm, vorzugsweise 0,08 bis 10 µm und eine Dichte von 1,2 bis 1,9 g/cm$^3$.

Durch den Zusatz von Tetrafluorethylenpolymerisaten wird insbesondere das Abtropfen der Formmassenschmelze während des Brandvorganges reduziert oder ganz verhindert.

Stellt man nun die erfindungsgemäßen Formmassen beispielsweise durch Schmelzcompoundierung in Knetern oder Extrudern aus Granulaten oder Pulvern der Komponenten A) bis E) sowie einem PTFE-Pulver, das Teilchengrößen und Dichten größer als für die erfindungsgemäßen einzusetzenden Polytetrafluorethylene genannt besitzt, her, so werden zwar Formmassen hoher Flammwidrigkeit erhalten, Formkörper daraus haben aber manchmal eine mangelhafte Oberfläche, beispielsweise Mikrorisse oder Schlieren.

Das wird mit Sicherheit vermieden, wenn die sehr feinteiligen und zudem ungesinterten Tetrafluorethylenpolymerisate in Form einer koagulierten Mischung von Emulsionen der Tetrafluorethylenpolymerisate F) mit Emulsionen der Pfropfpolymerisate B) eingesetzt werden, wobei zusätzlich maximal 4 Gew.-Teile, mindestens jedoch 0,1 Gew.-Teil, bezogen auf 100 Gew.-Teile der Summe der Komponenten A) + B) + C) und gegebenenfalls D), an Pfropfpolymerisat B) in Form einer Emulsion eingesetzt wird.

Zur Herstellung einer entsprechenden Mischung wird zuerst eine wäßrige Emulsion (Latex) eines Pfropfpolymerisates B) mit mittleren Latexteilchengrößen von 0,1 bis 2 µm, insbesondere 0,2 bis 0,6 µm, mit einer feinteiligen Emulsion eines Tetrafluorethylenpolymerisates in Wasser mit mittleren Teilchengrößen von 0,05-20 µm, insbesondere von 0,08-10 µm vermischt ; geeignete Tetrafluorethylenpolymerisat-Emulsionen besitzen üblicherweise Feststoffgehalte von 30-70 Gew.-%, insbesondere von 50-60 Gew.-%. Die Emulsionen der Propfpolymerisate B) besitzen Feststoffgehalte von 25-50 Gew.-%, vorzugsweise von 30-45 Gew.-%.

In der Emulsionsmischung liegt das Gewichtsverhältnis Pfropfpolymerisat B) zum Tetrafluorethylenpolymerisat F) zwischen 95 : 5 und 60 : 40. Anschließend wird die Emulsionsmischung in bekannter Weise koaguliert, beispielsweise durch Sprühtrocknung, Gefriertrocknung oder Koagulation mittels Zusatz von anorganischen oder organischen Salzen, Säuren, Basen oder organischen, mit Wasser mischbaren Lösungsmitteln, wie Alkoholen, Ketonen, vorzugsweise bei Temperaturen von 20-150 °C, insbesondere von 50-100 °C. Falls erforderlich, kann bei 50-200 °C, bevorzugt 70-100 °C getrocknet werden.

Geeignete Tetrafluorethylenpolymerisat-Emulsionen sind handelsübliche Produkte und werden beispielsweise von der Firma DuPont als Teflon® 30 N angeboten.

Gemäß der DE-OS 2 228 072 werden thermoplastische Polycarbonate mit einem Gemisch aus Hexabrombenzol und einer Antimonverbindung flammwidrig eingestellt, welche zusätzlich einen Phosphatester als Synergisten enthalten können. Der alleinige Zusatz von 10 Gew.-Teilen Triphenylphosphat zu Bisphenol-A-Polycarbonat hat allerdings keine Antitropfwirkung gemäß Entflammungstest U.L. Subj. 94 (siehe Seite 20 der DE-OS 2 228 072).

Aus der DE-OS 2 434 085 sind verschäumbare thermoplastische Kunststoffe bekannt, wobei als Thermoplasten unter anderem Polycarbonate, Polymerisate oder Mischungen davon genannt sind. Als Polymerisate sind auch solche aus Budadien, Styrol und Acrylnitril oder aus Styrol allein genannt. Als Flammschutzmittel können die verschäumbaren Kunststoffe Phosphatester enthalten, gegebenenfalls in Kombination mit Halogenverbindungen. Als Halogenverbindungen sind keine Polytetrafluorethylenpolymerisate empfohlen.

Aus US-Patent 4 355 126 beziehungsweise 4 107 232 sind unter anderem flammwidrige ABS-Polymerisate bekannt, die Polytetrafluorethylene enthalten. Als Flammschutzmittel ist Triphenylphosphat besonders bevorzugt. Die zusätzliche Mitverwendung von Polycarbonaten führt a priori noch nicht zum Ziel (siehe Vergleichsversuch).

Gemäß DE-OS 2 921 325 ist der Zusatz von Pentaerythritdiphosphaten und -diphosphonaten als Flammschutzmittel für Polycarbonate beschrieben, wobei zusätzlich Halogenverbindungen mitverwendet werden können, wobei dies gemäß Seite 9 der DE-OS 2 921 325 aus der zitierten US-Patentschrift 3 392 136 auch Polyvinylidenfluoride sein können. Den Polycarbonaten können ABS-Copolymerisate zugemischt sein. Da jedoch die Phosphate beziehungsweise Phosphonate der allgemeinen Struktur (I) als

alleinige Zusätze zu einer PC/ABS-Mischung kein VO in 1,6 mm erbringen, dürfte sich aus dieser Literaturstelle der Gegenstand der vorliegenden Erfindung nicht ableiten lassen.

Aus den Deutschen Offenlegungsschriften Nr. 2 903 100 und 2 918 883 sind flammwidrige Mischungen aus Polycarbonaten, ABS-Polymerisaten und Halogenverbindungen bekannt. Gemäß DE-OS 2 903 100 wird die Flammwidrigkeit durch spezielle organische Sulfonate erreicht. Fluorierte Polyolefine können als tropfhemmende Mittel zugesetzt werden. Gemäß DE-OS 2 918 883 wird die Flammwidrigkeit durch Alkali- oder Erdalkalisalze von Saüren in Kombination mit Antitropfmitteln erreicht, wobei die ABS-Polymerisate nur maximal 10 Gew.-%, bezogen auf Gesamtmischung betragen.

Gemäß EP-OS 0 074 112 werden zu Polycarbonat/ABS-Gemischen Phosphatester als Weichmacher zugegeben. Als Phosphatester ist beispielsweise Diphenyl-octyl-phosphat genannt. Ein Zusatz von fluorierten Polyolefinen ist nicht beschrieben.

Bekannt sind auch flammwidrige Polymermischungen, die neben Polytetrafluorethylenen und organischen Halogenverbindungen Polyphosphate mit $\bar{M}w$ von 1 600 bis 150 000 in Mengen von 1 bis 35 Gew.-% enthalten (EP-OS 0 103 230). Die Polycarbonate dieser Formmassen sind jedoch überwiegend aus tetramethylierten Diphenolen aufgebaut. Somit haben diese Formmassen den Nachteil, daß sie ein deutlich niedrigeres mechanischen Niveau als die vorliegenden Formmassen aufweisen. Außerdem führt der Einsatz von Polyphosphaten in PC/ABS-Formmassen, die auf einem Polycarbonat beruhen, das keine alkylierten Diphenole enthält, zu keinerlei flammschützenden Wirkung.

Bezüglich der schwierigen Verarbeitung von Polytetrafluorethylenen sei noch auf FR-PS 1 412 767 verwiesen, bezüglich der Einarbeitung von Polytetrafluorethylenen in Thermoplaste, wie aromatische Polycarbonate oder Polymerisate von ungesättigten Monomeren sei noch auf US-Patent 3 294 871 hingewiesen, sowie auf US-Patent 3 005 795, insbesondere Spalten 3/4, wo Fällung und Koagulation erwähnt sind.

GB-PS 14 59 648 beschreibt flammwidrige, nichttropfende Polymere, beispielsweise aus ABS-Polymeren oder aus Polycarbonaten, denen ein Flammschutzadditiv, wie beispielsweise Triphenylphosphat, ein nicht-brennbares Fasermaterial und Polytetrafluorethylenharz zugemischt worden ist. Das Beispiel 2 des GB-PS 14 59 648 zeigt, daß Polytetrafluorethylenharz ohne Faserzusatz nicht das Tropfen verhindert.

Aus der DE-OS 3 322 260 (Le A 22 391) sind flammwidrige thermoplastische Formmassen bekannt, die (a) aromatische Polycarbonate, (b) SAN-Pfropfpolymerisate, (c) thermoplastische Polymerisate, (d) gegebenenfalls Halogenverbindungen, (e) Antimontrioxid, Antimoncarbonat, Wismuttrioxid oder Wismutcarbonat und (f) feinteiliges Tetrafluorethylenpolymerisat enthalten, wobei dieses über eine wäßrige Emulsion des SAN-Pfropfpolymerisats (b) und gegebenenfalls ein wäßrige Emulsion des thermoplastischen Polymerisats (c) in die Formmasse eingebracht wird, wobei gute Oberflächen der Formmassen erzielt werden.

Die erfindungsgemäßen Formmassen können weitere bekannte Zusätze, wie Stabilisatoren, Pigmente, Fließmittel, Entformungsmittel und/oder Antistatika enthalten.

Die erfindungsgemäßen Formmassen, bestehend aus den Komponenten A), B), C), E), F) sowie gegebenenfalls D und/oder gegebenenfalls weiteren bekannten Zusätzen wie Stabilisatoren, Pigmenten, Fließmitteln, Entformungsmitteln und/oder Antistatika, werden hergestellt, indem man die jeweiligen Bestandteile in bekannter Weise vermischt und bei Temperaturen von 200 °C bis 330 °C in üblichen Aggregaten wie Innenknetern, Extrudern oder Doppelwellenschnecken schmelzcompoundiert oder schmelzextrudiert, wobei die Komponente F) wieder nur erfindungsgemäß in Form der bereits erwähnten koagulierten Mischung eingesetzt wird.

Gegenstand der vorliegenden Erfindung ist somit auch ein Verfahren zur Herstellung von thermoplastischen Formmassen bestehend aus den Komponenten A), B), C), E), F) und gegebenenfalls der Komponente D), Stabilisatoren, Pigmenten, Fließmitteln, Entformungsmitteln und/oder Antistatika, das dadurch gekennzeichnet ist, daß man die Komponenten A), B), C), E), F) und gegebenenfalls die Komponente D), Stabilisatoren, Pigmente, Fließmittel, Entformungsmittel und/oder Antistatika nach erfolgter Vermischung bei Temperaturen von 200 °C bis 330 °C in gebräuchlichen Aggregaten schmelzcompoundiert oder schmelzextrudiert, wobei die Komponente F) wieder nur in Form einer koagulierten Mischung mit der Komponente B) eingesetzt wird.

Die Vermischung der einzelnen Bestandteile kann in bekannter Weise sowohl sukzessive als auch simultan erfolgen, und zwar sowohl bei etwa 20 °C (Raumtemperatur) als auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind : Gehäuseteile jeder Art (z. B. für Haushaltgeräte wie Saftpressen, Kaffeemaschinen, Mixer) oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Eine weitere Form der Verarbeitung ist die Herstellung von Formkörpern durch Tiefziehen aus vorher hergestellten Platten oder Folien.

Teilchengröße bedeutet immer mittlerer Teilchendurchmesser $d_{50}$, ermittelt durch Ultrazentrifugenmessungen nach W. Scholtan et al., Kolloid-Z. u.Z. Polymere 250 (1972) 782-796.

## Beispiele

Eingesetzte Polykondensate und Polymerisate

A1) Ein Copolycarbonat bestehend aus 90 Gew.-% Bisphenol-A und 10 Gew.-% Tetrabrombisphenol-A mit einer relativen Lösungsviskosität von 1,284, gemessen in $CH_2Cl_2$ bei 25 °C und einer Konzentration von 0,5 Gew.-% Gehalt an Brom 5 Gew.-%.

A2) Ein Copolycarbonat auf Basis von Bisphenol-A und 5 Gew.-% Polydimethylsiloxan der Blocklänge ($P_n$) 40, mit einer relativen Lösungsviskosität von 1,31 (gemessen in $CH_2Cl_2$ bei 25 °C und einer Konzentration von 0,5 g/100 ml).

B) SAN-Pfropfpolymerisat von 50 Gew.-% Styrol-Acrylnitril-Gemisch (im Gew.-Verhältnis von 72 : 28) auf 50 % teilchenförmiges Polybutadien einer mittleren Teilchengröße ($d_{50}$) von 0,4 µm, erhalten durch Emulsionspolymerisation.

C) Styrol-Acrylnitril-Copolymerisat mit einem Styrol-Acrylnitril-Verhältnis von 70 : 30 und einer Grenzviskosität von $[\eta]$ = 0,55 dl/g (Messung in Dimethylformamid bei 20 °C).

E1) Diphenylkresylphosphat.

E2) Methanphosphonsäurediphenylester.

F1) Tetrafluorethylenpolymerisat als koagulierte Mischung aus einem SAN-Pfropfpolymerisat-Emulsion in Wasser und einer Tetrafluorethylenpolymerisat-Emulsion in Wasser. Das Gewichtsverhältnis Pfropfpolymerisat B) zum Tetrafluorethylenpolymerisat F) in der Mischung ist 90 Gew.-% : 10 Gew.-%. Die Tetrafluorethylenpolymerisat-Emulsion besitzt einen Feststoffgehalt von 60 % ; die Teilchengröße liegt zwischen 0,05 und 0,5 µm. Die SAN-Pfropfpolymerisat-Emulsion besitzt einen Feststoffgehalt von 34 Gew.-% und hatte eine Latexteilchengröße von 0,3-0,4 µm.

Herstellung von F1) : Die Emulsion des Tetrafluorethylenpolymerisats wurde mit der Emulsion des SAN-Pfropfpolymerisat B) vermischt und mit 1,8 Gew.-%, bezogen auf Polymerfeststoff, phenolischer Antioxidantien stabilisiert. Bei 85-95 °C wird die Mischung mit einer wäßrigen Lösung von $MgSO_4$ (Bittersalz) und Essigsäure bei pH 4-5 koaguliert, filtriert und bis zur praktischen Elektrolytfreiheit gewaschen, anschließend durch Zentrifugation von der Hauptmenge Wasser befreit und danach bei 100 °C zu einem Pulver getrocknet. Dieses Pulver kann dann mit den weiteren Komponenten in den beschriebenen Aggregaten compoundiert werden.

F2) Tetrafluorethylenpolymerisat in Pulverform mit einer Teilchengröße von 500-650 µm und einer Dichte von 2,18-2,20 g/$cm^3$ der Firma Hoechst (Hostaflon TF 2026),

D) Oligomeres Polycarbonat aus Tetrabrombisphenol A und einem durchschnittlichen Polykondensationsgrad von 5.

Herstellung der erfindungsgemäßen Formmassen

Die Compoundierung der Komponenten A, B, C, E, F und gegebenenfalls D erfolgte auf einem Doppelwellenextruder (Werner und Pfleiderer) vom Typ ZSK 53 bei einer Temperatur von 240 °C.

Die Herstellung von Formkörpern erfolgte auf einer Spritzgußmaschine bei 260 °C.

Das Brandverhalten der Proben wurde nach UL-Subj. 94 V in Prüfkörperdicken von 1,6 mm gemessen. Der UL-94-Test wird wie folgt durchgeführt :

Substanzproben werden zu Stäben der Abmessungen 127 × 12,7 × 1,6 mm geformt. Die Stäbe werden vertikal so montiert, daß die Unterseite des Probekörpers sich 305 mm über einem Streifen Verbandstoff befindet. Jeder Probestab wird einzeln mittels zweier aufeinanderfolgender Zündvorgänge von 10 s Dauer entzündet, die Brenneigenschaften nach jedem Zündvorgang werden beobachtet und danach die Probe bewertet. Zum Entzünden der Probe wird ein Bunsenbrenner mit einer 10 mm (3/8 inch) hohen blauen Flamme von Erdgas mit einer Wärmeeinhalt von 3,73 × $10^4$ kJ/$m^3$ (1,000 BTU per cubic foot) benutzt.

Die UL-94 V-0-Klassifizierung umfaßt die nachstehend beschriebenen Eigenschaften von Materialien, die gemäß der UL-94-Vorschrift geprüft wurden. Die Polycarbonate in dieser Klasse enthalten keine Proben, die länger als 10 s nach jeder Einwirkung der Testflamme brennen ; sie zeigen keine Gesamtflammzeit von mehr als 50 s bei der zweimaligen Flammeinwirkung auf jeden Probensatz ; sie enthalten keine Proben, die vollständig bis hinaus zu der am oberen Ende der Probe befestigten Halteklammer abbrennen ; sie weisen keine Proben auf, die die unterhalb der Probe angeordnete Watte durch brennende Tropfen oder Teilchen entzünden ; sie enthalten auch keine Proben, die länger als 30 s nach Entfernen der Testflamme glimmen.

Andere UL-94-Klassifizierungen bezeichnen Proben, die weniger flammwidrig und selbstverlöschend sind und die flammende Tropfen oder Teilchen abgeben. Diese Klassifizierungen werden mit UL-94 V-1 und V-2 bezeichnet. N. b. heißt « nicht bestanden » und ist die Klassifizierung von Proben die eine Nachbrennzeit von 30 sec. aufweisen.

Die Beurteilung der Formkörperoberfläche in Bezug auf Oberflächenstörungen wie Schlieren erfolgte visuell an Prüfkörpern der Abmessung 127 × 12,7 × 1,6 mm bzw. 60 × 40 × 2 mm.

Aus der folgenden Tabelle können die genauen Zusammensetzung der geprüften Formmassen sowie die erhaltenen Prüfdaten entnommen werden.

| | A 1 Gew.-Tl. | A 2 Gew.-Tl. | B Gew.-Tl. | C Gew.-Tl. | E 1 Gew.-Tl. | E 2 Gew.-Tl. | F 1 Gew.-Tl. | F 2 Gew.-Tl. | D Gew.-Tl. | Oberflächenbeschaffenheit | UL-94 (1,6 mm) |
|---|---|---|---|---|---|---|---|---|---|---|---|
| Vergleichsversuche | | | | | | | | | | | |
| V 1 | 70 | | 15 | 15 | 5 | | | | | ohne Befund | nb |
| V 2 | 70 | | 12 | 18 | | | | 0,15 | | Schlieren | nb |
| V 3 | 70 | | 12 | 18 | 5 | | | 0,2 | | Schlieren | |
| V 4 | 70 | | 12 | 18 | | | 2,0 | | | ohne Befund | nb |
| V 5 | | 60 | 12 | 18 | | | 2,0 | | 10 | ohne Befund | nb |
| Versuche gemäß vorliegender Erfindung | | | | | | | | | | | |
| E 1 | 70 | | 12 | 18 | 5 | | 2,0 | | | ohne Befund | VO |
| E 2 | 70 | | 12 | 18 | | 5 | 2,0 | | | ohne Bedund | VO |
| E 3 | | 60 | 12 | 18 | | 2 | 2,0 | | 10 | ohne Befund | VO |

**Patentansprüche**

1. Thermoplastische Formmassen bestehend aus

A) 20 bis 85 Gew.-Teile eines thermoplastischen aromatischen Polycarbonats auf Basis der Diphenole der Formel (II),

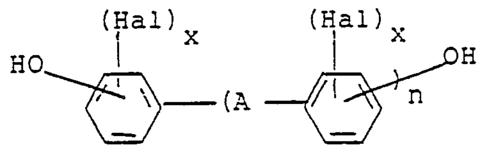

(II)

worin A eine Einfachbindung, ein $C_1$-$C_5$-Alkylen, ein $C_2$-$C_5$-Alkyliden, ein $C_5$-$C_6$-Cycloalkyliden, —S— oder —$SO_2$—, Hal, Chlor oder Brom, x 0, 1 oder 2 und « n » 1 oder null sind, und gegebenenfalls der Formel (IIa)

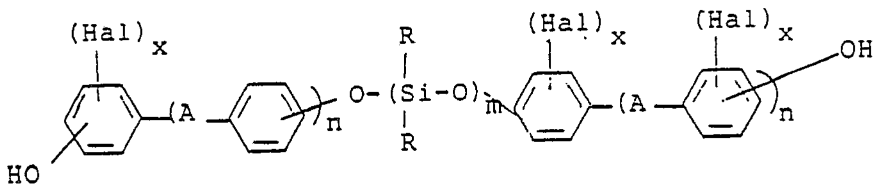

(IIa)

worin A, Hal, x und « n » die für Formel (II) genannte Bedeutung haben, und die R's gleich oder verschieden sind und ein lineares $C_1$-$C_{20}$-Alkyl, verzweigtes $C_3$-$C_{20}$-Alkyl, $C_6$-$C_{20}$-Aryl sind und « m » eine ganze Zahl zwischen 5 und 100 ist,

B) 5 bis 50 Gew.-Teilen eines Pfropfpolymerisats aus

B)1) 5 bis 90 Gew.-Teilen einer Mischung aus

B)1)1) 50 bis 95 Gew.-% Styrol, α-Methylstyrol, kernsubstituiertem Styrol, Methylmethacrylat oder Mischungen daraus, und

B)1)2) 50 bis 5 Gew.-% (Meth) Acrylnitril, Methylmethacrylat, Maleinsäureanhydrid, N-substituiertem Maleinimid oder Mischungen daraus, auf

B)2) 95 bis 10 Gew.-Teile eines Kautschuks mit einer Glastemperatur $T_G \leq 10$ °C,

C) 5 bis 70 Gew.-Teilen eines thermoplastischen Copolymerisats aus

C)1) 50 bis 95 Gew.-% Styrol, α-Methylstyrol, kernsubstituiertem Styrol, Methylmethacrylat oder Mischungen daraus, und

C)2) 50 bis 5 Gew.-% (Meth) Acrylnitril, Methylmethacrylat, Maleinsäureanhydrid, N-substituiertem Maleinimid oder Mischungen daraus, und gegebenenfalls

D) 3 bis 15 Gew.-Teilen einer niedermolekularen oder hochmolekularen Halogenverbindung, insbesondere einer Bromverbindung, bezogen auf jeweils 100 Gew.-Teile aus A + B + C und gegebenenfalls D),

wobei der Halogengehalt resultierend aus den Komponenten A) + D), zwischen 3 Gew.-% und 10 Gew.-%, bezogen auf das Gesamtgewicht der Komponenten A) + D), beträgt, dadurch gekennzeichnet, daß sie zusätzlich

E) 2 bis 12 Gew.-Teile einer Phosphorverbindung der Formel

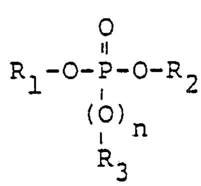

(I)

worin $R_1$, $R_2$ und $R_3$ unabhängig voneinander ein gegebenenfalls halogeniertes $C_1$-$C_8$-Alkyl oder ein gegebenenfalls halogeniertes $C_6$-$C_{20}$-Aryl und « n » 0 oder 1 sind, und

F) 0,1-0,5 Gew.-Teile eines Tetrafluorethylenpolymerisats mit mittleren Teilchengrößen von 0,05 bis 20 µm und einer Dichte von 1,2 bis 1,9 g/cm$^3$ enthalten,

wobei sich die Gew.-Teile der Komponenten E) und F) jeweils auf 100 Gew.-Teile der Summe der Komponenten A) + B) + C) und gegebenenfalls D) beziehen und

wobei die Komponente F) in Form einer koagulierten Mischung von Emulsionen der Tetrafluorethylenpolymerisate F) mit Emulsionen von zusätzlichen Mengen an Pfropfpolymerisaten B) von maximal 4 Gew.-Teilen, mindestens jedoch 0,1 Gew.-Teil, bezogen auf 100 Gew.-Teile der Summe der Komponenten A) + B) + C) und gegebenenfalls D), eingesetzt wird.

2. Formmassen gemäß Anspruch 1, bestehend aus den Komponenten A), B), C), E), F) und gegebenenfalls D) und zusätzlich mindestens einem Zusatz, ausgewählt aus der Gruppe der Stabilisatoren, Pigmente, Fließmittel, Entformungsmittel und Antistatika.

3. Verfahren zur Herstellung der Formmassen des Anspruchs 1, dadurch gekennzeichnet, daß man die Komponenten A), B), C), E), F) und gegebenenfalls D) nach erfolgter Vermischung bei Temperaturen von 200 °C bis 330 °C in gebräuchlichen Aggregaten schmelzcompoundiert oder schmelzextrudiert, wobei die Komponente F) in Form einer koagulierten Mischung von Emulsionen der Tetrafluorethylenpolymerisate F) mit Emulsionen von Pfropfpolymerisaten B) eingesetzt wird.

4. Verfahren gemäß Anspruch 3 zur Herstellung der Formmassen des Anspruchs 2, dadurch gekennzeichnet, daß man zusätzlich mindestens einen Zusatz, ausgewählt aus der Gruppe der Stabilisatoren, Pigmente, Fließmittel, Entformungsmittel und Antistatika einbezieht.

## Claims

1. Thermoplastic molding compositions consisting of

A) from 20 to 85 parts by weight of a thermoplastic aromatic polycarbonate based on diphenols corresponding to the following formula

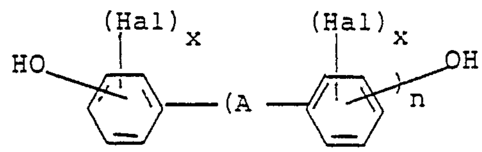

(II)

in which A is a single bond, a $C_1$-$C_5$ alkylene, a $C_2$-$C_5$ alkylidene, a $C_5$-$C_6$ cycloalkylidene, —S— or —$SO_2$—, Hal is chlorine or bromine, x = 0, 1 or 2 and « n » is 1 or zero, and optionally to the following formula

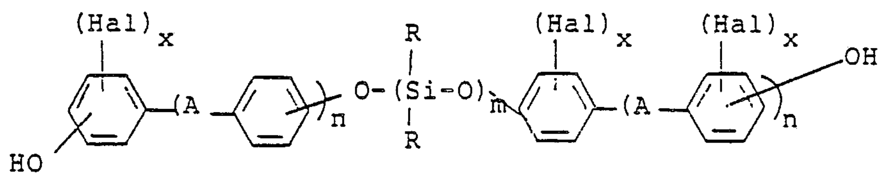

(IIa)

in which A, Hal, x and « n » have the meanings defined for formula (II) and the R's are the same or different and represent a linear $C_1$-$C_{20}$ alkyl, branched $C_3$-$C_{20}$ alkyl, $C_6$-$C_{20}$ aryl and « m » is an integer of 5 to 100,

B) from 5 to 50 parts by weight of a graft polymer of

B)1) from 5 to 90 parts by weight of a mixture of

B)1)1) from 50 to 95 % by weight styrene, α-methyl styrene, nucleus-substituted styrene, methyl methacrylate or mixtures thereof and

B)1)2) from 5 to 50% by weight of (meth)acrylonitrile, methyl methacrylate, maleic anhydride, N-substituted maleic imide or mixtures thereof, on

B)2) from 95 to 10 parts by weight of a rubber having a glass transition temperature $T_G$ of ≥ 10 °C,

C) from 5 to 70 parts by weight of a thermoplastic copolymer of

C)1) from 50 to 95 % by weight styrene, α-methyl styrene, nucleus-substituted styrene, methyl methacrylate or mixtures thereof and

C)2) from 50 to 5 % by weight (meth)acrylonitrile, methyl, methacrylate, maleic anhydride, N-substituted maleic imide or mixtures thereof and, optionally,

D) from 3 to 15 parts by weight of a low molecular weight or high molecular weight halogen compound, more especially a bromine compound, based in each case on 100 parts by weight of A) + B) + C) and, optionally D), the halogen content resulting from components A) + D) being between 3 % by weight and 10 % by weight, based on the total weight of components A) + D), characterized in that they additionally contain

E) from 2 to 12 parts by weight of a phosphorus compound corresponding to the following formula

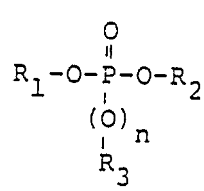

(I)

in which $R_1$, $R_2$ and $R_3$ independently of one another represent an optionally halogenated $C_1$-$C_8$ alkyl or an optionally halogenated $C_6$-$C_{20}$ aryl and « n » is 0 or 1, and

F) from 0.1 to 0.5 part by weight of a tetrafluoroethylene polymer having average particle sizes of 0.05 to 20 μm and a density of 1.2 to 1.9 g/cm³,

the parts by weight of components E) and F) being based in either case on 100 parts by weight of the sum of components A) + B) + C) and, optionally, D) and

component F) being used in the form of a coagulated mixture of emulsions of the tetrafluoroethylene polymers F) with emulsions of additional quantities of graft polymers B) of at most 4 parts by weight, but at least 0.1 part by weight, based on 100 parts by weight of the sum of components A) + B) + C) and, optionally, D).

2. Molding compositions as claimed in claim 1 consisting of components A), B), C), E), F) and, optionally D) and, in addition, of at least one additive selected from the group comprising stabilizers, pigments, flow promoters, mold release agents and antistatic agents.

3. A process for the production of the molding compositions claimed in claim 1, characterized in that, after mixing, components A), B), C), E), F) and, optionally, D) are melt-compounded or melt-extruded in conventional units at temperatures of 200 °C to 330 °C, component F) being used in the form of a coagulated mixture of emulsions of the tetrafluoroethylene polymers F) with emulsions of graft polymers B).

4. A process as claimed in claim 3 for the production of the molding compositions claimed in claim 2, characterized in that at least one additive selected from the group comprising stabilizers, pigments, flow promoters, mold release agents and antistatic agents are additionally incorporated.

**Revendications**

1. Mélanges à mouler thermoplastiques constitués de :

A) 20 à 85 parties en poids d'un polycarbonate aromatique thermoplastique à base des diphénols de formule (II)

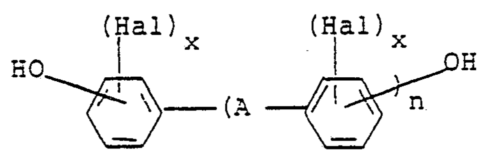

(II)

dans laquelle A représente une liaison simple, un groupe alkylène en $C_1$ à $C_5$, un groupe alkylidène en $C_2$ à $C_5$, un groupe cycloalkylidène en $C_5$ ou $C_6$, —S— ou —$SO_2$—, Hal représente du chlore ou du brome, x a la valeur 0, 1 ou 2 et « n » est égal à 1 ou 0, et le cas échéant de formule (IIa)

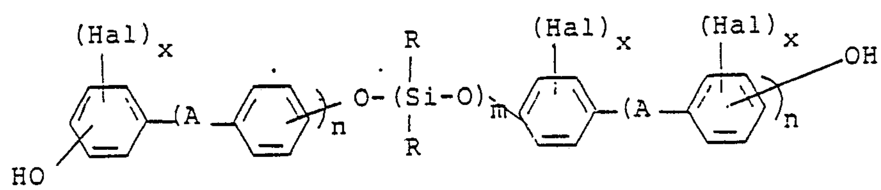

(IIa)

dans laquelle A, Hal, x et « n » ont la définition indiquée pour la formule (II), et les groupes R sont identiques ou différents et représentent un groupe alkyle linéaire en $C_1$ à $C_{20}$, un groupe alkyle ramifié en $C_3$ à $C_{20}$, un groupe aryle en $C_6$ à $C_{20}$, et « m » est un nombre entier ayant une valeur de 5 à 100,

B) 5 à 50 parties en poids d'un polymère de greffage dérivé

B)1) de 5 à 90 parties en poids d'un mélange

B)1)1) de 50 à 95 % en poids de styrène, d'α-méthylstyrène, de styrène substitué sur le noyau, de méthacrylate de méthyle ou de leurs mélanges, et

B)1)2) de 50 à 5 % en poids de (méth)acrylonitrile, de méthacrylate de méthyle, d'anhydride d'acide maléique, de maléimide substitué sur l'azote ou de leurs mélanges, sur

B)2) 95 à 10 parties en poids d'un caoutchouc de température $T_G$ de transition vitreuse inférieure ou égale à 10 °C,

C) 5 à 70 parties en poids d'un copolymère thermoplastique dérivé

C)1) de 50 à 95 % en poids de styrène, d'α-méthylstyrène, de styrène substitué sur le noyau, de méthacrylate de méthyle ou de leurs mélanges et

C)2) de 50 à 5 % en poids de (méth)acrylonitrile, de méthacrylate de méthyle, d'anhydride d'acide maléique, de maléimide substitué sur l'atome d'azote ou de leurs mélanges, et le cas échéant,

D) 3 à 15 parties en poids d'un composé halogéné de bas poids moléculaire ou de haut poids moléculaire, notamment d'un composé bromé, dans chaque cas pour 100 parties en poids de A + B + C

et le cas échéant D), la teneur en halogènes résultant des composants A) + D) s'élevant à une valeur de 3 à 10 % en poids par rapport au poids total des composants A) + D), caractérisés en ce qu'ils contiennent en outre

E) 2 à 12 parties en poids d'un composé phosphoré de formule

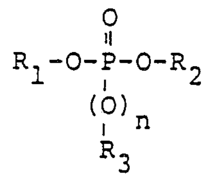

(I)

dans laquelle $R_1$, $R_2$ et $R_3$ représentent, indépendamment les uns des autres, un groupe alkyle en $C_1$ à $C_8$ éventuellement halogéné ou un groupe aryle en $C_6$ à $C_{20}$ éventuellement halogéné et « n » a la valeur 0 ou 1, et

F) 0,1 à 0,5 partie en poids d'un polymère de tétrafluoréthylène avec des grosseurs moyennes de particules de 0,05 à 20 µm et une masse volumique de 1,2 à 1,9 $g/cm^3$,

les parties en poids des composants E) et F) se rapportant dans chaque cas à 100 parties en poids de la somme des composants A) + B) + C) et le cas échéant D) et

le composant F) étant utilisé sous la forme d'un mélange coagulé d'émulsions de polymères de tétrafluoréthylène F) avec des émulsions de quantités additionnelles de polymérisats greffés B) d'un maximum de 4 parties en poids, mais d'un minimum de 0,1 partie en poids, pour 100 parties en poids de la somme des composants A) + B) + C) et le cas échéant D).

2. Mélanges à mouler suivant la revendication 1, constitués des composants A), B), C), E), F), et le cas échéant D) et en outre d'au moins un additif choisi dans le groupe des agents stabilisants, des pigments, des agents facilitant l'écoulement, des agents de démoulage et des agents antistatiques.

3. Procédé de production des mélanges à mouler suivant la revendication 1, caractérisé en ce qu'on formule à l'état fondu ou on extrude à l'état fondu les composants A), B), C), E), F) et le cas échéant D) après leur mélange à des températures de 200 à 330 °C dans des appareils classiques, le composant F) étant utilisé sous la forme d'un mélange coagulé d'émulsions des polymérisats de tétrafluoréthylène F) avec des émulsions de polymères greffés B).

4. Procédé suivant la revendication 3, pour la production de mélanges à mouler suivant la revendication 2, caractérisé en ce qu'on incorpore en outre au moins un additif choisi dans le groupe des agents stabilisants, des pigments, des agents favorisant l'écoulement, des agents de démoulage et des agents antistatiques.